# EUROPEAN PATENT SPECIFICATION

(11) **EP 3 401 177 B1**
(45) Date of publication and mention of the grant of the patent: **05.05.2021**
(21) Application number: 18171808.1
(22) Date of filing: 11.05.2018
(51) Int. Cl.: B60T 15/46, B60T 7/04, B60T 13/12

(54) **DEVICE FOR CONTROLLING A TRAILER-BRAKE VALVE, CONNECTABLE TO THE BRAKING SYSTEM OF A TRAILER.**
ANORDNUNG ZUR STEUERUNG EINES ANHÄNGERBREMSVENTILS, ZUR KOPPLUNG MIT EINEM BREMSSYSTEM EINES ANHÄNGERFAHRZEUGS.
DISPOSITIF DE CONTROLE POUR SOUPAPE DE FREIN DE REMORQUE, ADAPTE A ETRE INTEGRÉ DANS LE SYSTÈME DE FREINAGE DU REMORQUE.

(30) Priority: 12.05.2017 IT 201700052010
(43) Date of publication of application: 14.11.2018
(73) Proprietor: SAFIM S.r.l., 41123 Modena (MO) (IT)
(72) Inventor: Mamei, Eronne, 41123 Modena (IT); Mamei, Enrico, 41123 Modena (IT); Mamei, Andrea, 41123 Modena (IT)
(74) Representative: Zoli, Filippo

(56) References cited:
- EP-A1- 1 253 055
- EP-A1- 3 000 631
- WO-A1-97/33782
- WO-A1-2006/111989
- WO-A1-2009/016167
- WO-A1-2017/072672
- CN-U- 202 806 860
- FR-A1- 2 263 916

## Description

The present invention relates to a device for controlling a trailer-brake valve, connectable to the braking system of a trailer, for hydrostatic-driven towing vehicles provided with at least one variable displacement pump and to the relevant trailer braking control apparatus.

As is well known, in towing vehicles equipped with hydrostatic drives, the power of the motor is transferred to the wheels by means of pumps and motors capable of continuously varying their displacement, so as to increase or reduce the speed of the vehicle itself.

An example of such devices is known from the FR 2263916 A1.

In towing vehicles known to date, following a deceleration caused by the hydrostatic drive, or following a variation in the displacement of the relevant pump, only the towing vehicle is braked, while the trailer continues to move thereby pushing the towing vehicle itself. As can be easily appreciated, this causes a situation of instability and danger.

This drawback is all the more accentuated by the suddenness of the deceleration caused by the variation in displacement.

As is known, the speed of the towing vehicle can be changed in various ways, namely by means of a manual control, by a foot-pedal control, by lifting the accelerator pedal, or even by means of the braking pedal.

Therefore, to date, a delivery line of a work fluid under pressure, a discharge line, a hydrostatic drive pump displacement adjustment line, valve means interposed between the delivery line, the discharge line and the adjustment line and command means of these valve means such as, precisely, a manual control, a foot-pedal control, or the braking pedal are generally provided.

More specifically, the reduction of the speed of the towing vehicle can be achieved by means of the so-called inching function, which is implemented during the first part of the braking pedal stroke in order to reduce the power of the drive, thus reducing speed before the braking system is activated.

It is also known that between a towing vehicle and its trailer a connecting device must be placed, having a pair of male joints adapted to fit into a pair of relative female joints connectable to a control line adapted to supply the trailer braking system, and to an additional line adapted to deactivate the automatic brake and/or the parking brake of the trailer itself respectively.

According to recently introduced regulations, in order to stabilize the towing vehicle and the trailer, following a deceleration caused by the hydrostatic drive of the towing vehicle, it is correct that the trailer be also braked for a predefined period of time provided for by the regulation.

The main aim of the present invention is to provide a device for controlling the braking of a trailer for towing vehicles with hydrostatic drive provided with at least one variable displacement pump which allows the automatic activation of the trailer braking following a deceleration of the towing vehicle, in order to prevent the trailer from exerting a pushing action on the towing vehicle itself. Within this aim, one object of the present invention is to enable the braking of the trailer to be activated following a deceleration of the towing vehicle for a predefined time interval.

One object of the present invention is to provide a device which allows resetting the braking of the trailer once the speed of the towing vehicle has stabilized.

Not the last object of the present invention is to enable the braking action of the trailer to be prolonged also after stabilizing the speed of the towing vehicle in the event of the variation in the speed of the towing vehicle being obtained by means of the so-called inching function.

Another object of the present invention is to provide a device for controlling the braking of a trailer for hydrostatic-driven towing vehicles which allows overcoming the aforementioned drawbacks of the prior art within the scope of a simple, rational, easy, efficient to use and cost-effective solution.

The aforementioned objects are achieved by the present device for controlling a trailer-brake valve, connectable to the braking system of a trailer, for towing vehicles with hydrostatic drive provided with at least one variable displacement pump, according to claim 1, and by the braking control apparatus of a trailer for towing vehicles with hydrostatic drive provided with at least one variable displacement pump according to claim 15.

Other characteristics and advantages of the present invention will become more evident from the description of a preferred, but not exclusive embodiment of a braking control apparatus of a trailer for towing vehicles with hydrostatic drive provided with at least one variable displacement pump, illustrated by way of an indicative, but non-limiting example, in the attached drawings in which:
Figure 1 is a hydraulic diagram of a braking control apparatus according to the invention, in a first embodiment;
Figure 2 is a hydraulic diagram of a braking control apparatus according to the invention, in a second embodiment;
Figure 3 is a hydraulic diagram of a braking control apparatus according to the invention, in a third embodiment.

With particular reference to these figures, reference numeral 50 globally indicates an apparatus for controlling the braking of a trailer for hydrostatic-driven towing vehicles and reference numeral 1 indicates a device for controlling a trailer-brake valve connectable to the trailer braking system, being part of the apparatus 50.

The hydrostatic drive of a towing vehicle is provided with at least one variable displacement pump P, e.g. of the piston pump type, connected in a fluid-operated manner to a hydrostatic motor M.

As is known, by increasing the displacement of the pump P, the speed of the towing vehicle consequently increases, while by decreasing the displacement the speed drops.

The variation in the displacement of the pump P occurs by varying the supply pressure of an adjustment device C operationally connected to the pump P itself. The apparatus 50 comprises at least one delivery line 2 connectable to a source of a work fluid under pressure (not shown in the illustrations), at least one discharge line 3 connectable to a discharge tank 4.

The apparatus 50 also comprises at least one trailer-brake valve 8 adapted to adjust the pressure of the work fluid along a control line 9 connectable to the braking system of the trailer and along an additional line (not shown in the illustrations) operatively connectable to the automatic and/or parking brake of the trailer itself.

The trailer-brake valve 8 is movable between at least one home position, in which it prevents the passage of the work fluid towards the control line 9, and at least one braking position, in which it permits the passage of the work fluid towards the control line 9 to actuate the braking of the trailer.

The device 1, being part of the apparatus 50, comprises at least one adjustment line 5 connectable to the adjustment device C of the displacement of the pump P and connectable to at least one of a delivery line 2 and a discharge line 3.

The apparatus 50 in fact comprises main valve means 6 interposed between the delivery line 2, the discharge line 3 and the adjustment line 5, and command means 7 of the first valve means themselves.

The main valve means 6 can be actuated between at least one supply position, in which the adjustment line 5 is placed in communication with the delivery line 2, and at least one discharge position, in which the adjustment line 5 is placed in communication with the discharge line 3. More specifically, the main valve means 6 move continuously between the supply position and the discharge position, so as to choke the flow of work fluid towards the adjustment line 5, and consequently vary the pressure along it, according to need.

The device 1 then comprises first piloting means 10 operatively connectable to the trailer-brake valve 8 and which can be activated to displace the trailer-brake valve itself from the home position towards the braking position.

The first piloting means 10 comprise at least one piloting channel 11 connectable to the braking system of the towing vehicle. Therefore, following the operation of the braking pedal F of the towing vehicle, the piloting channel 11 sends a pressure signal to the trailer-brake valve 8, thus commanding its displacement towards the braking position to allow the work fluid to be conveyed along the control line 9.

According to the invention, the first piloting means 10 comprise at least one accumulator 12 of the work fluid, at least one fluid-operated cylinder 13 inside which are defined at least a first chamber 14 communicating with the adjustment line 5 and at least a second chamber 15 communicating with the accumulator 12 through a thrust line 16, where inside the cylinder 13 is housed in a sliding manner a piston 17 interposed between the chambers 14 and 15. The piston 17 is adapted to interact with the trailer-brake valve 8, to displace it from the home position to the braking position, as a result of a decrease in pressure occurring in the first chamber 14 with respect to the second chamber 15.

More particularly, the piston 17 is movable from an inactive position, in which it does not interact with the trailer-brake valve 8, and a thrust position, in which it protrudes from the cylinder 13 with respect to the inactive position and interacts with the trailer-brake valve 8 to displace it towards the relevant braking position, so as to command the sending of the work fluid along the control line 9.

Preferably, inside the first chamber 14 are housed first elastic means 18, which are adapted to counteract the displacement of the piston 17 from the inactive position to the thrust position.

In the embodiments shown in the illustrations, the piston 17 comprises at least one actuating element 17a housed in the cylinder 13 and movable in contrast to the first elastic means 18 and at least one thrust element 19a protruding from the cylinder 13, operatively connected to the trailer-brake valve 8 and kinematically connected to the actuating element 17a.

More in detail, the piston 17 comprises at least one intermediate element 19c, housed inside the first chamber 14 and arranged in contact with the thrust element 19a, where between the intermediate element 19c and the piston 17 are interposed second elastic means 20.

The second elastic means 20 have two functions, one of which is to limit the braking pressure of the trailer regardless of the pressure difference between chambers 14 and 15, while the other is to stabilize the braking level of the trailer for a longer time despite the gradual reduction of the pressure difference between chambers 14 and 15.

The second elastic means 20 are then calibrated to operate the trailer-brake valve 8 once a predefined force has been reached and send a constant pressure to the trailer corresponding to the deceleration value set by the hydrostatic drive.

Conveniently, the first piloting means 10 comprise at least one small piston 19b which is supported resting on the thrust element 19a, on the opposite side of the intermediate element 19c, and operatively connected to the trailer-brake valve 8.

Preferably, the accumulator 12 is of the spring type, i.e. it comprises a containment body 12a inside which is housed a piston 12b movable between a discharge configuration, in which it is arranged in the proximity of the bottom of the body 12a and the volume occupied by the work fluid is minimum, and a charge configuration, in which it is spaced apart from the bottom of the body 12a and the volume occupied by the work fluid depends on the pressure along the thrust line 16, where inside the body 12a are housed third elastic means 21 adapted to counteract the displacement of the piston 12b from the discharge configuration to the charge configuration.

According to the invention a connecting channel 22 is also provided, which is interposed between the adjustment line 5 and the thrust line 16, and work fluid flow adjusting means 23 between the adjustment line 5 and the thrust line 16, arranged along the connecting channel 22.

The adjusting means 23 are adapted to allow the passage of the work fluid from the adjustment line 5 towards the thrust line 16 and to choke the passage of the work fluid from the thrust line 16 towards the adjustment line 5. In other words, the adjusting means 23 are adapted to allow the free passage of the work fluid from the adjustment line 5 towards the thrust line 16, so that when the pressure along the adjustment line 5 increases, it also substantially increases at the same time along the thrust line 16, and are adapted to choke the passage of the work fluid from the thrust line 16 towards the adjustment line 5, so that following a pressure drop along the adjustment line 5 the work fluid takes a predefined time interval to pass from the thrust line 16 to the control line itself thus obtaining a rebalance of the pressures along the two lines.

Advantageously, the connecting channel 22 comprises at least one delivery branch 22a and one return branch 22b arranged parallel to one another, and the adjusting means 23 comprise at least one one-way valve 24 arranged along the delivery branch 22a to allow the passage of the fluid from the adjustment line 5 towards the thrust line 16 and to prevent it from the thrust line 16 towards the adjustment line 5, and at least one choke device 25 for choking the flow arranged along the return branch 22b.

The work fluid then flows along the delivery branch 22a in the passage from the adjustment line 5 to the thrust line 16 and the return branch 22b in the passage from the thrust line 16 to the adjustment line 5. As shown in the illustrations, the return branch 22b branches off from the delivery branch 22a, upstream and downstream of the one-way valve 24.

In the embodiments shown in the illustrations, the choke device 25 is of the type of a simple restriction or of a compensated flow regulator of the type known to the technician in the sector.

Alternative embodiments cannot however be ruled out, in which the choke device 25 comprises valve means of a type known to the technician in the sector, such as, e.g., solenoid valves.

The command means 7 comprise at least one of: a manual control 26, a foot-pedal control 27, an electronic device and the braking pedal F of the towing vehicle.

In the first embodiment shown in the illustrations, the command means 7 are of the type of a manual control 26 or a foot-pedal control 27. Therefore, the operator, by operating the command means 7, which in this case are released from the braking pedal F, operates the main valve means 6 and varies the pressure along the adjustment line 5 and, therefore, the displacement of the pump P.

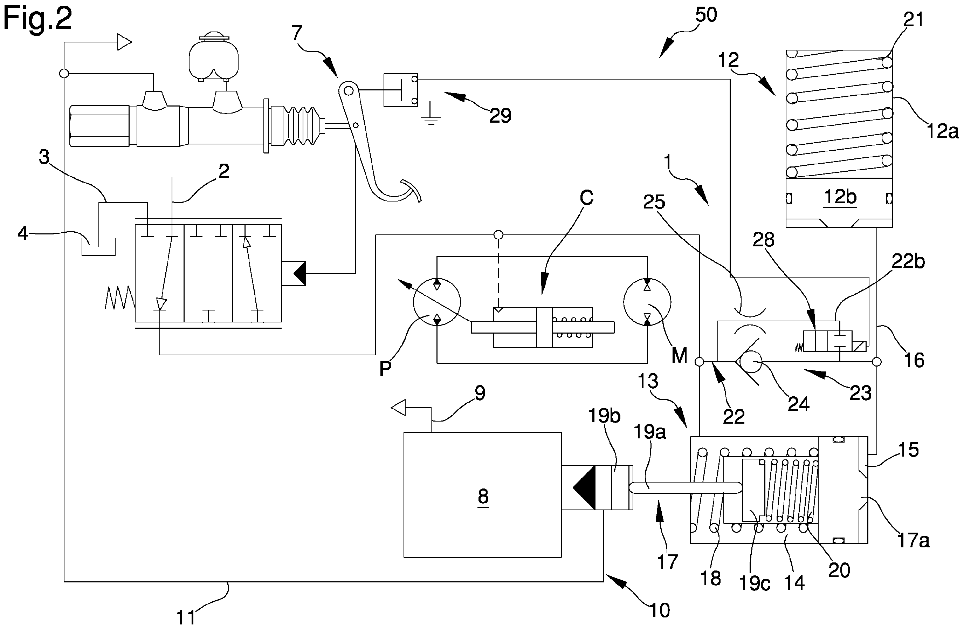

In the event of, on the other hand, the command means 7 are composed of the braking pedal F, which performs the inching function, as in the embodiment shown in Figure 2, the adjusting means 23 also comprise adjustment valve means 28, arranged along the return branch 22b and which can be actuated between an inactive position, in which they isolate the thrust line 16 from the adjustment line 5, and an active position, in which the thrust line 16 is put in communication with the adjustment line 5.

Preferably, there are second piloting means 29 of the adjustment valve means 28 operatively connectable to the braking pedal F and operable to displace the adjustment valve means themselves from the active position to the inactive position.

More particularly, the second piloting means 29 comprise at least one solenoid valve 30 which can be operated as a result of the actuation of the braking pedal F; as a result of the actuation of the solenoid valve 30, the adjustment valve means 28 move therefore to the inactive position, thus preventing the work fluid from passing from the thrust line 16 to the adjustment line 5, so as to keep a difference in pressure between these lines and, therefore, also between the first and second chamber 14 and 15. As long as the adjustment valve means 28 remain in the inactive position, the thrust element 19a interacts with the trailer-brake valve 8 to push it towards the braking position.

In the event of the trailer braking action needs to be immediately ended up following the release of the braking pedal F, additional valve means 31 may be provided which are arranged parallel to the restriction 25 and adapted to put the adjustment line 5 directly in communication with the thrust line 16 and operable between an inactive position, in which they isolate the thrust line 16 from the adjustment line 5, and an active position, in which they put the thrust line 16 in communication with the adjustment line 5.

Preferably, there are additional piloting means 32 of the additional valve means 31 operable to move the additional valve means themselves from the active position to the inactive position.

More particularly, the additional piloting means 32 comprise at least one solenoid valve 33 which can be operated on command; following the operation of the solenoid valve 33, the additional valve means 31 therefore move to the inactive position, preventing the work fluid from passing from the thrust line 16 to the adjustment line 5, so as to keep a difference in pressure between these lines and, therefore, also between the first and the second chamber 14 and 15, while when the solenoid valve 33 is deactivated, the additional valve means 31 move to the active position and allow the passage of the work fluid and pressure rebalance.

Advantageously, between the thrust line 16 and the adjustment line 5 is also interposed a pressure relief valve 34 which is adapted to put these lines in communication to each other when reaching a predefined pressure difference between these.

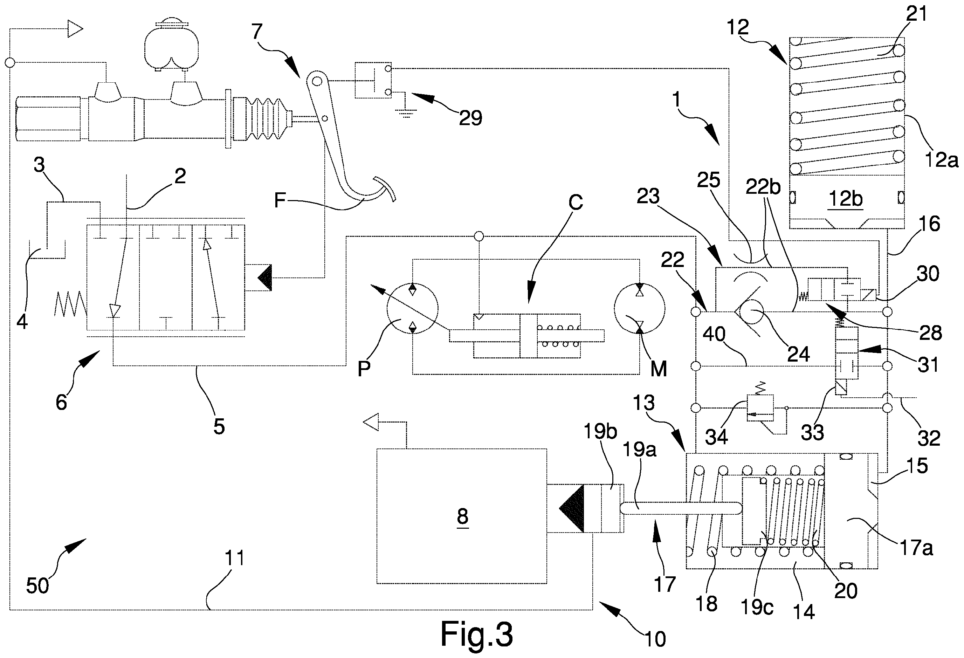

The additional valve means 31 and the pressure relief valve 34 are shown in Figure 3.

The operation of the present invention is as follows.

In normal operating conditions, i.e. stable or increasing travel speed, the work fluid pressure is substantially the same along the adjustment line 5 and along the thrust line 16. The work fluid that flows along the adjustment line 5 also enters along the thrust line 16, passing freely along the delivery branch 22a and through the one-way valve 24 and, through it, enters inside the second chamber 15 and inside the accumulator 12, charging it.

In this operating condition, therefore, the actuating element 17a remains stationary because the pressure present in the first and in the second chamber 14 and 15 is substantially the same so that the forces acting on it balance each other.

As soon as the operator operates on the command means 7 to reduce the speed of the towing vehicle, due to the pressure reduction that occurs along the adjustment line 5, the work fluid present along the thrust line 16 travels along the return branch 22b and crosses the choke device 25, due to the effect of which a pressure difference is generated between the thrust line 16 and the adjustment line 5 and, therefore, also between the chambers 14 and 15.

This pressure difference causes the actuating element 17a to displace towards the thrust position, counteracting the first elastic means 18 and, by means of the thrust element 19a, the trailer-brake valve 8 to displace towards the braking position.

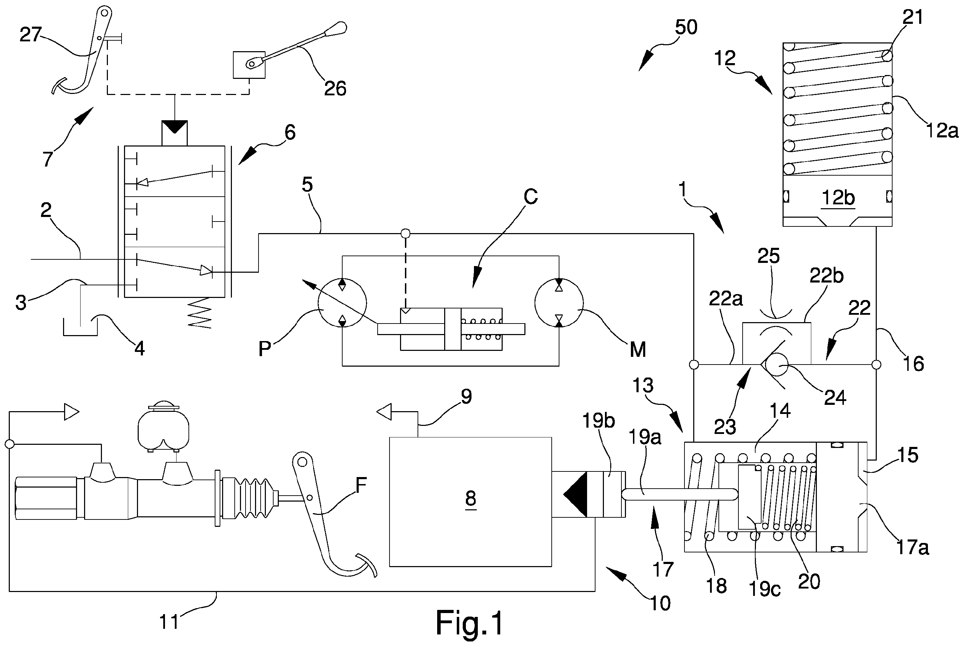

In the first embodiment shown in Figure 1, after a predefined time interval, which depends on the calibration of the choke device 25, the pressure along the adjustment line 5 and along the thrust line 16 is balanced, as is the thrust exerted by the first and the second chamber 14 and 15 on the actuating element 17a which, due to the effect of the first elastic means 18 returns to the starting position. This means, of course, that the trailer-brake valve 8 also returns to its idle position, thus interrupting the braking action of the trailer.

Suitably, the trailer-brake valve 8 is still activated when the braking pedal F is operated by means of the piloting channel 11.

In the second embodiment shown in figure 2, the operation of the braking pedal F, in addition to involving the displacement of the actuating element 17a according to what is described above for the first embodiment, also involves the operation of the solenoid valve 30 which commands the adjustment valve means 28, which therefore move to the inactive position so as to break the connection between the thrust line 16 and the adjustment line 5. This means that the piston 17 remains in the thrust position, exerting an action on the trailer-brake valve 8, to bring it to the braking position, as long as the braking pedal F remains activated.

As soon as the operator releases the braking pedal F, the solenoid valve 30 is deactivated and the adjustment valve means 28 return to their active position, thus allowing the work fluid to flow through the return branch 22b, passing through the restriction 25, and to rebalance the pressure present along the adjustment line 5 with the pressure of the thrust line 16.

Therefore, at the end of the predefined time interval which is necessary to rebalance the pressures, the action exerted by the actuating element 17a on the trailer-brake valve 8 ends up and, with it, also the braking action of the trailer. In has in practice been ascertained that the described invention achieves the intended objects and, in particular, the fact is underlined that the device to which this invention refers permits automatically activating the braking of the trailer following a deceleration of the towing vehicle.

In particular, the presence of the piloting means of the trailer-brake valve operatively connected to the adjustment line of the displacement of the hydrostatic drive pump of the towing vehicle allows correlating the activation of the trailer-brake valve itself with the decrease in the pump displacement. Again, the device to which this invention refers also allows the operation of the trailer-brake valve during the inching function and, thanks to the adjustment valve means, allows trailer braking to be kept active until the braking pedal of the towing vehicle is released.

## Claims

1. Device (1) for controlling a trailer-brake valve (8), connectable to the braking system of a trailer, for hydrostatic-driven towing vehicles which is provided with at least one variable displacement pump (P), comprising:
- at least one adjustment line (5) connectable to at least one of a delivery line (2) of a work fluid under pressure and a discharge line (3) and connectable to an adjustment device (C) for adjusting the displacement variation in the pump (P) of a towing vehicle, said adjustment line (5) being adapted to convey the work fluid to the pump itself to vary the displacement thereof;
- first piloting means (10) operatively connectable to a trailer-brake valve (8) to displace it from a home position to at least one braking position of the trailer, **characterized by** the fact that said first piloting means (10) comprise
- at least one accumulator (12) of the work fluid,
- at least one fluid operated cylinder (13) inside which is defined a first chamber (14) communicating with said adjustment line (5) and a second chamber (15) communicating with a thrust line (16) which, in turn, communicates with said accumulator (12), wherein inside said cylinder (13) is housed in a sliding manner at least one piston (17) on which said first and said second chamber (14, 15) act on opposite sides, said piston (17) being adapted to interact with said trailer-brake valve (8) to displace it from the home position to the braking position as a result of a decrease in pressure occurring in said first chamber (14) with respect to said second chamber (15),
and **characterized by** the fact that it comprises at least one connecting channel (22) interposed between said adjustment line (5) and said thrust line (16) and flow adjusting means (23) arranged along said connecting channel (22) adapted to allow the passage of the work fluid from said adjustment line (5) to said thrust line (16) and to choke the passage of the work fluid from said thrust line (16) to said adjustment line (5), so as to define a pressure difference between them as a result of a drop in pressure along said adjustment line (5).

2. Device (1) according to claim 1, **characterized by** the fact that said piston (17) is movable, as a result of a drop in pressure along said adjustment line (5), from an inactive position to at least a thrust position, in which it protrudes from said cylinder (13) with respect to the inactive position so as to interact with said trailer-brake valve (8) to displace it to the relevant braking position, and by the fact that it comprises first elastic means (18) housed inside said first chamber (14) and adapted to counteract the displacement of said piston (17) to the thrust position.

3. Device (1) according to claim 1 or 2, **characterized by** the fact that said piston (17) comprises at least one actuating element (17a) housed in said cylinder (13) and movable in contrast to said first elastic means (18), and at least one thrust element (19a) protruding from said cylinder (13), adapted to interact with said trailer-brake valve (8) and operatively connected to said actuating element (17a).

4. Device (1) according to claim 3, **characterized by** the fact that said piston (17) comprises at least one intermediate element (19c) housed inside said first chamber (14) and arranged in contact with said thrust element (19a), wherein between said intermediate element (19c) and said actuating element (17a) are interposed second elastic means (20).

5. Device (1) according to claim 4, **characterized by** the fact that said first piloting means (10) comprise at least one small piston (19b) which is supported on said thrust element (19a) on the opposite side of said intermediate element (19c) and operatively connectable to the trailer-brake valve (8).

6. Device (1) according to one or more of the preceding claims, **characterized by** the fact that said connecting channel (22) comprises at least one delivery branch (22a) and at least one return branch (22b) arranged parallel to one another, and by the fact that said flow adjusting means (23) comprise at least one one-way valve (24) arranged along said delivery branch (22a) and adapted to prevent the work fluid from flowing from said thrust line (16) to said adjustment line (5) and at least one choke device (25) for choking the flow of the work fluid arranged along said return branch (22b).

7. Device (1) according to claim 6, **characterized by** the fact that said flow adjusting means (23) comprise adjustment valve means (28) arranged along said return branch (22b) and which can be actuated between an inactive position, in which they isolate said thrust line (16) from said adjustment line (5), and an active position, in which said thrust line (16) is placed in communication with said adjustment line (5).

8. Device (1) according to claim 7, **characterized by** the fact that it comprises second piloting means (29) of said adjustment valve means (28) operatively connectable to the braking pedal (F) of the towing vehicle.

9. Device (1) according to claim 8, **characterized by** the fact that said second piloting means (29) comprise at least one solenoid valve (30) which can be operated as a result of the actuation of the braking pedal (F) to displace said adjustment valve means (28) from the active position to the inactive position.

10. Device (1) according to one or more of claims 7 to 9, **characterized by** the fact that it comprises an additional channel (40) interposed between said adjustment line (5) and said thrust line (16) and arranged parallel to said connecting channel (22) and by the fact that it comprises additional valve means (31) arranged along said additional channel (40) and which can be actuated between an inactive position, in which they isolate said thrust line (16) from said adjustment line (5), and an active position, in which they place said thrust line (16) in communication with said adjustment line (5).

11. Device (1) according to claim 10, **characterized by** the fact that it comprises additional piloting means (32) of said additional valve means (31) comprising at least one solenoid valve (33) which can be operated on command to displace said additional valve means (31) from the active position to the inactive position.

12. Device (1) according to one or more of the preceding claims, **characterized by** the fact that it comprises at least one pressure relief valve (34) interposed between said adjustment line (5) and said thrust line (16).

13. Device (1) according to one or more of the preceding claims, **characterized by** the fact that said accumulator (12) comprises at least one containment body (12a) inside which is housed a piston (12b) movable between a discharge configuration, in which it is arranged in the proximity of the bottom of said body (12a), and a charge configuration, in which it is spaced apart from the bottom of said body (12a), and third elastic means (21) adapted to counteract the displacement of said piston (12b) from the discharge configuration to the charge configuration.

14. Apparatus (50) for controlling the braking of a trailer for hydrostatic-driven towing vehicles which is provided with at least one variable displacement pump (P), comprising:
- at least one delivery line (2) connectable to a source of a work fluid under pressure;
- at least one discharge line (3) connectable to a discharge tank (4);
- at least one adjustment line (5) connectable to an adjustment device (C) for adjusting the displacement variation in the pump (P) of a towing vehicle and adapted to convey the work fluid to the pump itself to vary the displacement thereof;
- main valve means (6) interposed between said delivery line (2), said discharge line (3) and said adjustment line (5), which can be actuated between at least one supply position, in which said adjustment line (5) is placed in communication with said delivery line (2), and at least one discharge position, in which said adjustment line (5) is placed in communication with said discharge line (3);
- command means (7) of said main valve means (6);
- at least one trailer-brake valve (8) adapted to adjust the pressure of the work fluid along a control line (9) connectable to the braking system of the trailer and along an additional line operatively connectable to the automatic and/or parking brake of the trailer itself, wherein said trailer-brake valve (8) is movable between at least one home position, in which it prevents the passage of the work fluid along said control line (9), and at least one braking position, in which it permits the passage of the work fluid along said control line (9) to actuate the braking of the trailer;
- first piloting means (10) which can be operated to displace said trailer-brake valve (8) from the home position to the braking position and comprising at least one piloting channel (11) connectable to the braking system of the towing vehicle;
**characterized by** the fact that said first piloting means (10) comprise
- at least one accumulator (12) of the work fluid,
- at least one fluid operated cylinder (13) inside which is defined a first chamber (14) communicating with said adjustment line (5) and a second chamber (15) communicating with a thrust line (16) in turn communicating with said accumulator (12), wherein inside said cylinder (13) is housed in a sliding manner at least one piston (17) on which said first and said second chamber (14, 15) act on opposite sides, said piston (17) being adapted to interact with said trailer-brake valve (8) to displace it from the home position to the braking position as a result of a decrease in pressure occurring in said first chamber (14) with respect to said second chamber (15),
and **characterized by** the fact that it comprises at least one connecting channel (22) interposed between said adjustment line (5) and said thrust line (16) and flow adjusting means (23) arranged along said connecting channel (22) adapted to allow the passage of the work fluid from said adjustment line (5) to said thrust line (16) and to choke the passage of the work fluid from said thrust line (16) to said adjustment line (5), so as to define a pressure difference between them as a result of a drop in pressure along said adjustment line (5).

## Patentansprüche

1. Vorrichtung (1) zur Steuerung eines an die Bremsanlage eines Anhängers anschließbaren Anhänger-Bremsventils (8) für hydrostatisch angetriebene Zugfahrzeuge, die mit mindestens einer variablen Verdrängungspumpe (P) versehen ist, umfassend:
- mindestens eine Einstellleitung (5), die mit mindestens einer von einer Zufuhrleitung (2) eines unter Druck stehenden Arbeitsfluids und einer Auslassleitung (3) verbindbar ist und mit einer Einstellvorrichtung (C) zum Einstellen der Verdrängungsänderung in der Pumpe (P) eines Zugfahrzeugs verbindbar ist, wobei die Einstellleitung (5) ausgebildet ist, das Arbeitsfluid zu der Pumpe selbst zu fördern, um deren Verdrängung zu ändern;
- erste Steuermittel (10), die mit einem Anhänger-Bremsventil (8) in eine Wirkverbindung bringbar sind, um es aus einer Ausgangsstellung in mindestens eine Bremsstellung des Anhängers zu verstellen,
**dadurch gekennzeichnet, dass** die ersten Steuermittel (10) umfassen
- mindestens einen Druckspeicher (12) für das Arbeitsfluid,
- mindestens einen fluidbetätigten Zylinder (13), in dem eine erste Kammer (14), die mit der Einstellleitung (5) in Verbindung steht, und eine zweite Kammer (15) definiert ist, die mit einer Druckleitung (16) in Verbindung steht, die ihrerseits mit dem Druckspeicher (12) in Verbindung steht, wobei in dem Zylinder (13) mindestens ein Kolben (17) gleitend aufgenommen ist, auf den die erste und die zweite Kammer (14, 15) auf entgegengesetzten Seiten wirken, wobei der Kolben (17) dazu ausgebildet ist, mit dem Anhänger-Bremsventil (8) zusammenzuwirken, um es als Ergebnis einer in der ersten Kammer (14) in Bezug auf die zweite Kammer (15) auftretenden Druckabnahme aus der Ausgangsstellung in die Bremsstellung zu verschieben,
und **dadurch gekennzeichnet, dass** sie mindestens einen Verbindungskanal (22), der zwischen der Einstellleitung (5) und der Druckleitung (16) angeordnet ist, und Strömungseinstellmittel (23) umfasst, die entlang des Verbindungskanals (22) angeordnet sind und ausgebildet sind, den Durchgang des Arbeitsfluids von der Einstellleitung (5) zu der Druckleitung (16) zu ermöglichen und den Durchgang des Arbeitsfluids von der Druckleitung (16) zu der Einstellleitung (5) zu drosseln, um so eine Druckdifferenz zwischen ihnen als Ergebnis eines Druckabfalls entlang der Einstellleitung (5) zu definieren.

2. Vorrichtung (1) nach Anspruch 1, **dadurch gekennzeichnet, dass** der Kolben (17) infolge eines Druckabfalls entlang der Verstellleitung (5) aus einer inaktiven Stellung in mindestens eine Druckstellung bewegbar ist, in der er aus dem Zylinder (13) in Bezug auf die inaktive Stellung herausragt, um so mit dem Anhänger-Bremsventil (8) zusammenzuwirken, um es in die relevante Bremsstellung zu verschieben, und dadurch, dass sie eine erste elastische Mittel (18) umfasst, die in der ersten Kammer (14) aufgenommen sind und ausgebildet sind, der Verschiebung des Kolbens (17) in die Druckstellung entgegenzuwirken.

3. Vorrichtung (1) nach Anspruch 1 oder 2, **dadurch gekennzeichnet, dass** der Kolben (17) mindestens ein Betätigungselement (17a), das in dem Zylinder (13) aufgenommen und entgegen der ersten elastischen Mittel (18) beweglich ist, und mindestens ein Schubelement (19a) umfasst, das aus dem Zylinder (13) herausragt, das ausgebildet ist, mit dem Anhänger-Bremsventil (8) zusammenzuwirken und das mit dem Betätigungselement (17a) in Wirkverbindung steht.

4. Vorrichtung (1) nach Anspruch 3, **dadurch gekennzeichnet, dass** der Kolben (17) mindestens ein Zwischenelement (19c) umfasst, das in der ersten Kammer (14) aufgenommen ist und in Kontakt mit dem Schubelement (19a) angeordnet ist, wobei zwischen dem Zwischenelement (19c) und dem Betätigungselement (17a) zweite elastische Mittel (20) angeordnet sind.

5. Vorrichtung (1) nach Anspruch 4, **dadurch gekennzeichnet, dass** die ersten Steuermittel (10) mindestens einen kleinen Kolben (19b) umfassen, der auf dem Schubelement (19a) gegenüber dem Zwischenelement (19c) gelagert ist und mit dem Anhänger-Bremsventil (8) wirkverbunden werden kann.

6. Vorrichtung (1) nach einem oder mehreren der vorhergehenden Ansprüche, **dadurch gekennzeichnet, dass** der Verbindungskanal (22) mindestens einen Zufuhrzweig (22a) und mindestens einen Rücklaufzweig (22b) umfasst, die parallel zueinander angeordnet sind, und dadurch, dass die Strömungseinstellmittel (23) mindestens ein Einwegventil (24), das entlang des Zufuhrzweigs (22a) angeordnet ist und ausgebildet ist, das Arbeitsfluid daran zu hindern, von der Druckleitung (16) zu der Einstellleitung (5) zu strömen, und mindestens eine Drosselvorrichtung (25), um eine Strömung des Arbeitsfluids zu drosseln, die entlang des Rückführungszweigs (22b) angeordnet ist, umfassen.

7. Vorrichtung (1) nach Anspruch 6, **dadurch gekennzeichnet, dass** die Strömungseinstellmittel (23) Einstellventilmittel (28) umfassen, die entlang des Rücklaufzweigs (22b) angeordnet sind und die zwischen einer inaktiven Stellung, in der sie die Druckleitung (16) von der Einstellleitung (5) isolieren, und einer aktiven Stellung, in der die Druckleitung (16) mit der Einstellleitung (5) in Verbindung gebracht wird, betätigt werden können.

8. Vorrichtung (1) nach Anspruch 7, **dadurch gekennzeichnet, dass** sie zweite Steuermittel (29) der Einstellventileinrichtung (28) umfasst, die mit dem Bremspedal (F) des Zugfahrzeugs in eine Wirkverbindung bringbar sind.

9. Vorrichtung (1) nach Anspruch 8, **dadurch gekennzeichnet, dass** die zweiten Steuermittel (29) mindestens ein Magnetventil (30) umfassen, das infolge der Betätigung des Bremspedals (F) betätigt werden kann, um die Einstellventilmittel (28) von der aktiven Stellung in die inaktive Stellung zu verlagern.

10. Vorrichtung (1) nach einem oder mehreren der Ansprüche 7 bis 9, **dadurch gekennzeichnet, dass** sie einen zusätzlichen Kanal (40) aufweist, der zwischen der Einstellleitung (5) und der Druckleitung (16) angeordnet ist und parallel zu dem Verbindungskanal (22) verläuft, und dass sie zusätzliche Ventilmittel (31) aufweist, die entlang des zusätzlichen Kanals (40) angeordnet sind und die zwischen einer inaktiven Stellung, in der sie die Druckleitung (16) von der Einstellleitung (5) isolieren, und einer aktiven Stellung, in der sie die Druckleitung (16) in Verbindung mit der Einstellleitung (5) bringen, betätigt werden können.

11. Vorrichtung (1) nach Anspruch 10, **dadurch gekennzeichnet, dass** sie zusätzliche Steuermittel (32) der zusätzlichen Ventilmittel (31) umfasst, die mindestens ein Magnetventil (33) umfassen, das auf Befehl betätigt werden kann, um die zusätzlichen Ventilmittel (31) von der aktiven Stellung in die inaktive Stellung zu verlagern.

12. Vorrichtung (1) nach einem oder mehreren der vorhergehenden Ansprüche, **dadurch gekennzeichnet, dass** sie mindestens ein Druckbegrenzungsventil (34) umfasst, das zwischen der Einstellleitung (5) und der Druckleitung (16) angeordnet ist.

13. Vorrichtung (1) nach einem oder mehreren der vorhergehenden Ansprüche, **dadurch gekennzeichnet, dass** der Druckspeicher (12) mindestens einen Aufnahmekörper (12a), in dem ein Kolben (12b) zwischen einer Auslasskonfiguration, in der er in der Nähe des Bodens des Körpers (12a) angeordnet ist, und einer Ladekonfiguration, in der er vom Boden des Körpers (12a) beabstandet ist, beweglich aufgenommen ist, und dritte elastische Mittel (21) umfasst, die ausgebildet sind, Verschiebung des Kolbens (12b) von der Auslasskonfiguration zu der Ladekonfiguration entgegenzuwirken.

14. Anordnung (50) zur Steuerung des Bremsens eines Anhängers für hydrostatisch angetriebene Zugfahrzeuge, die mit mindestens einer variablen Verdrängungspumpe (P) versehen ist, umfassend:
- mindestens eine Zufuhrleitung (2), die mit einer Quelle für ein unter Druck stehendes Arbeitsfluid verbindbar ist;
- mindestens eine Auslassleitung (3), die mit einem Auslassbehälter (4) verbindbar ist;
- mindestens eine Einstellleitung (5), die mit einer Einstellvorrichtung (C) zum Einstellen der Verdrängungsänderung in der Pumpe (P) eines Zugfahrzeugs verbindbar ist und ausgebildet ist, das Arbeitsfluid zur Pumpe selbst zu fördern, um deren Verdrängung zu ändern;
- Hauptventilmittel (6), die zwischen der Zufuhrleitung (2), der Auslassleitung (3) und der Einstellleitung (5) angeordnet sind, die zwischen mindestens einer Zufuhrstellung, in der die Einstellleitung (5) in Verbindung mit der Förderleitung (2) gebracht ist, und mindestens einer Auslassstellung, in der die Einstellleitung (5) in Verbindung mit der Auslassleitung (3) gebracht ist, betätigt werden kann;
- Steuermittel (7) der Hauptventilmittel (6);
- mindestens ein Anhänger-Bremsventil (8), das ausgebildet ist, den Druck des Arbeitsfluids entlang einer Steuerleitung (9), die mit dem Bremssystem des Anhängers verbindbar ist, und entlang einer zusätzlichen Leitung, die mit der automatischen und/oder Feststellbremse des Anhängers selbst in eine Wirkverbindung bringbar ist, einzustellen, wobei das Anhänger-Bremsventil (8) zwischen mindestens einer Ausgangsstellung, in der es den Durchgang des Arbeitsfluids entlang der Steuerleitung (9) verhindert, und mindestens einer Bremsstellung, in der es den Durchgang des Arbeitsfluids entlang der Steuerleitung (9) zur Betätigung der Bremsung des Anhängers zulässt, bewegbar ist;
- erste Steuermittel (10), die betätigt werden können, um das Anhänger-Bremsventil (8) aus der Ausgangsstellung in die Bremsstellung zu verstellen, und die mindestens einen Steuerkanal (11) umfassen, der mit dem Bremssystem des Zugfahrzeugs verbunden werden kann;
**dadurch gekennzeichnet, dass** die ersten Steuermittel (10) umfassen
- mindestens einen Druckspeicher (12) für das Arbeitsfluid;
- mindestens einen fluidbetätigten Zylinder (13), in dem eine erste Kammer (14), die mit der Einstellleitung (5) in Verbindung steht, und eine zweite Kammer (15) definiert ist, die mit einer Druckleitung (16) in Verbindung steht, die ihrerseits mit dem Druckspeicher (12) in Verbindung steht, wobei in dem Zylinder (13) mindestens ein Kolben (17) gleitend aufgenommen ist, auf den die erste und die zweite Kammer (14, 15) auf entgegengesetzten Seiten wirken, wobei der Kolben (17) dazu ausgebildet ist, mit dem Anhänger-Bremsventil (8) zusammenzuwirken, um es als Ergebnis einer in der ersten Kammer (14) in Bezug auf die zweite Kammer (15) auftretenden Druckabnahme aus der Ausgangsstellung in die Bremsstellung zu verschieben,
und **dadurch gekennzeichnet, dass** sie mindestens einen Verbindungskanal (22), der zwischen der Einstellleitung (5) und der Druckleitung (16) angeordnet ist, und Strömungseinstellmittel (23) umfasst, die entlang des Verbindungskanals (22) angeordnet sind und ausgebildet sind, den Durchgang des Arbeitsfluids von der Einstellleitung (5) zu der Druckleitung (16) zu ermöglichen und den Durchgang des Arbeitsfluids von der Druckleitung (16) zu der Einstellleitung (5) zu drosseln, um so eine Druckdifferenz zwischen ihnen als Ergebnis eines Druckabfalls entlang der Einstellleitung (5) zu definieren.

## Revendications

1. Dispositif (1) de contrôle d'une valve de frein de remorque (8), pouvant être connectée au système de freinage d'une remorque, pour véhicules tracteurs à entraînement hydrostatique qui sont dotés d'au moins une pompe (P) à cylindrée variable, comprenant :
- au moins une conduite de réglage (5) pouvant être connectée à au moins une parmi une conduite de distribution (2) d'un fluide de travail sous pression et une conduite de refoulement (3) et pouvant être connectée à un dispositif de réglage (C) pour régler la variation de cylindrée dans la pompe (P) d'un véhicule tracteur, ladite conduite de réglage (5) étant adaptée pour acheminer le fluide de travail vers la pompe elle-même pour en faire varier la cylindrée ;
- des premiers moyens de pilotage (10) pouvant être connectés de manière fonctionnelle à une valve de frein de remorque (8) pour la déplacer d'une position de départ à au moins une position de freinage de la remorque, **caractérisé par le fait que** lesdits premiers moyens de pilotage (10) comprennent
- au moins un accumulateur (12) du fluide de travail,
- au moins un cylindre (13) actionné par fluide à l'intérieur duquel est définie une première chambre (14) communiquant avec ladite conduite de réglage (5) et une seconde chambre (15) communiquant avec une conduite de poussée (16) qui, à son tour, communique avec ledit accumulateur (12), dans lequel à l'intérieur dudit cylindre (13) est logé de manière coulissante au moins un piston (17) sur lequel ladite première et ladite seconde chambre (14, 15) agissent sur des côtés opposés, ledit piston (17) étant adapté pour interagir avec ladite valve de frein de remorque (8) pour la déplacer de la position de départ à la position de freinage en conséquence d'une diminution de pression se produisant dans ladite première chambre (14) par rapport à ladite seconde chambre (15),
et **caractérisé par le fait qu'**il comprend au moins un canal de connexion (22) interposé entre ladite conduite de réglage (5) et ladite conduite de poussée (16) et des moyens de réglage de débit (23) agencés le long dudit canal de connexion (22) adapté pour permettre le passage du fluide de travail de ladite conduite de réglage (5) à ladite conduite de poussée (16) et pour étrangler le passage du fluide de travail de ladite conduite de poussée (16) à ladite conduite de réglage (5), de manière à définir une différence de pression entre celles-ci en conséquence d'une chute de pression le long de ladite conduite de réglage (5).

2. Dispositif (1) selon la revendication 1, **caractérisé par le fait que** ledit piston (17) est mobile, en conséquence d'une chute de pression le long de ladite conduite de réglage (5), d'une position inactive à au moins une position de poussée, dans laquelle il fait saillie dudit cylindre (13) par rapport à la position inactive de manière à interagir avec ladite valve de frein de remorque (8) pour la déplacer vers la position de freinage correspondante, et **par le fait qu'**il comprend des premiers moyens élastiques (18) logés à l'intérieur de ladite première chambre (14) et adaptés pour contrecarrer le déplacement dudit piston (17) vers la position de poussée.

3. Dispositif (1) selon la revendication 1 ou 2, **caractérisé par le fait que** ledit piston (17) comprend au moins un élément d'actionnement (17a) logé dans ledit cylindre (13) et mobile contrairement auxdits premiers moyens élastiques (18), et au moins un élément de poussée (19a) faisant saillie dudit cylindre (13), adapté pour interagir avec ladite valve de frein de remorque (8) et connecté de manière fonctionnelle audit élément d'actionnement (17a).

4. Dispositif (1) selon la revendication 3, **caractérisé par le fait que** ledit piston (17) comprend au moins un élément intermédiaire (19c) logé à l'intérieur de ladite première chambre (14) et agencé en contact avec ledit élément de poussée (19a), dans lequel entre ledit élément intermédiaire (19c) et ledit élément d'actionnement (17a) sont interposés des deuxièmes moyens élastiques (20).

5. Dispositif (1) selon la revendication 4, **caractérisé par le fait que** lesdits premiers moyens de pilotage (10) comprennent au moins un petit piston (19b) qui prend appui sur ledit élément de poussée (19a) du côté opposé dudit élément intermédiaire (19c) et pouvant être connecté en fonctionnement à la valve de frein de remorque (8).

6. Dispositif (1) selon une ou plusieurs des revendications précédentes, **caractérisé par le fait que** ledit canal de connexion (22) comprend au moins une branche de distribution (22a) et au moins une branche de retour (22b) agencées parallèlement l'une à l'autre, et **par le fait que** lesdits moyens de réglage de débit (23) comprennent au moins une valve de retenue (24) agencée le long de ladite branche de distribution (22a) et adaptée pour empêcher le fluide de travail de s'écouler de ladite conduite de poussée (16) vers ladite conduite de réglage (5) et au moins un dispositif d'étranglement (25) pour étrangler l'écoulement du fluide de travail agencé le long de ladite branche de retour (22b).

7. Dispositif (1) selon la revendication 6, **caractérisé par le fait que** lesdits moyens de réglage de débit (23) comprennent des moyens de valve de réglage (28) agencés le long de ladite branche de retour (22b) et qui peuvent être actionnés entre une position inactive, dans laquelle ils isolent ladite conduite de poussée (16) de ladite conduite de réglage (5), et une position active, dans laquelle ladite conduite de poussée (16) est placée en communication avec ladite conduite de réglage (5).

8. Dispositif (1) selon la revendication 7, **caractérisé par le fait qu'**il comprend des seconds moyens de pilotage (29) desdits moyens de valve de réglage (28) pouvant être connectés de manière fonctionnelle à la pédale de freinage (F) du véhicule tracteur.

9. Dispositif (1) selon la revendication 8, **caractérisé par le fait que** lesdits seconds moyens de pilotage (29) comprennent au moins une électrovalve (30) qui peut être actionnée en raison de l'actionnement de la pédale de freinage (F) pour déplacer lesdits moyens de valve de réglage (28) de la position active à la position inactive.

10. Dispositif (1) selon une ou plusieurs des revendications 7 à 9, **caractérisé par le fait qu'**il comprend un canal supplémentaire (40) interposé entre ladite conduite de réglage (5) et ladite conduite de poussée (16) et agencé parallèlement audit canal de connexion (22) et **par le fait qu'**il comprend des moyens de valve supplémentaires (31) agencés le long dudit canal supplémentaire (40) et qui peuvent être actionnés entre une position inactive, dans laquelle ils isolent ladite conduite de poussée (16) de ladite conduite de réglage (5), et une position active, dans laquelle ils mettent ladite conduite de poussée (16) en communication avec ladite conduite de réglage (5).

11. Dispositif (1) selon la revendication 10, **caractérisé par le fait qu'**il comprend des moyens de pilotage supplémentaires (32) desdits moyens de valve supplémentaires (31) comprenant au moins une électrovalve (33) qui peut être actionnée sur ordre pour déplacer lesdits moyens de valve supplémentaires (31) de la position active à la position inactive.

12. Dispositif (1) selon une ou plusieurs des revendications précédentes, **caractérisé par le fait qu'**il comprend au moins une valve de détente de pression (34) interposée entre ladite conduite de réglage (5) et ladite conduite de poussée (16).

13. Dispositif (1) selon une ou plusieurs des revendications précédentes, **caractérisé par le fait que** ledit accumulateur (12) comprend au moins un corps (12a) de confinement à l'intérieur duquel est logé un piston (12b) mobile entre une configuration de refoulement, dans laquelle il est agencé à proximité du fond dudit corps (12a), et une configuration de charge, dans laquelle il est espacé du fond dudit corps (12a), et des troisièmes moyens élastiques (21) adaptés pour contrecarrer le déplacement dudit piston (12b) de la configuration de refoulement à la configuration de charge.

14. Appareil (50) de commande du freinage d'une remorque pour véhicules tracteurs à entraînement hydrostatique qui sont munis d'au moins une pompe (P) à cylindrée variable, comprenant :
- au moins une conduite de distribution (2) pouvant être connectée à une source d'un fluide de travail sous pression ;
- au moins une conduite de refoulement (3) pouvant être connectée à un réservoir de refoulement (4) ;
- au moins une conduite de réglage (5) pouvant être connectée à un dispositif de réglage (C) pour régler la variation de cylindrée de la pompe (P) d'un véhicule tracteur et adaptée pour acheminer le fluide de travail vers la pompe elle-même pour en faire varier la cylindrée ;
- des moyens de valve principaux (6) interposés entre ladite conduite de distribution (2), ladite conduite de refoulement (3) et ladite conduite de réglage (5), qui peuvent être actionnées entre au moins une position d'alimentation, dans laquelle ladite conduite de réglage (5) est mise en communication avec ladite conduite de distribution (2), et au moins une position de refoulement, dans laquelle ladite conduite de réglage (5) est placée en communication avec ladite conduite de refoulement (3) ;
- des moyens de manœuvre (7) desdits moyens de valve principaux (6) ;
- au moins une valve de frein de remorque (8) adaptée pour régler la pression du fluide de travail le long d'une conduite de commande (9) pouvant être connectée au système de freinage de la remorque et le long d'une conduite supplémentaire pouvant être connectée de manière fonctionnelle au frein automatique et/ou de stationnement de la remorque elle-même, dans lequel ladite valve de frein de remorque (8) est mobile entre au moins une position de départ, dans laquelle elle empêche le passage du fluide de travail le long de ladite conduite de commande (9), et au moins une position de freinage, dans laquelle elle permet le passage du fluide de travail le long de ladite conduite de commande (9) pour actionner le freinage de la remorque ;
- des premiers moyens de pilotage (10) qui peuvent fonctionner pour déplacer ladite valve de frein de remorque (8) de la position de départ à la position de freinage et comprenant au moins un canal de pilotage (11) pouvant être connecté au système de freinage du véhicule tracteur ;
**caractérisé par le fait que** lesdits premiers moyens de pilotage (10) comprennent
- au moins un accumulateur (12) du fluide de travail,
- au moins un cylindre (13) actionné par fluide à l'intérieur duquel est définie une première chambre (14) communiquant avec ladite conduite de réglage (5) et une seconde chambre (15) communiquant avec une conduite de poussée (16) communiquant à son tour avec ledit accumulateur (12), dans lequel à l'intérieur dudit cylindre (13) est logé de manière coulissante au moins un piston (17) sur lequel lesdites première et seconde chambres (14, 15) agissent sur des côtés opposés, ledit piston (17) étant adapté pour interagir avec ladite valve de frein de remorque (8) pour la déplacer de la position de départ à la position de freinage en raison d'une diminution de pression se produisant dans ladite première chambre (14) par rapport à ladite seconde chambre (15),
et **caractérisé par le fait qu'**il comprend au moins un canal de connexion (22) interposé entre ladite conduite de réglage (5) et ladite conduite de poussée (16) et des moyens de réglage de débit (23) agencés le long dudit canal de connexion (22) adapté pour permettre le passage du fluide de travail de ladite conduite de réglage (5) à ladite conduite de poussée (16) et pour étrangler le passage du fluide de travail de ladite conduite de poussée (16) à ladite conduite de réglage (5), de manière à définir une différence de pression entre celles-ci en raison d'une chute de pression le long de ladite conduite de réglage (5).
